(19) Europäisches Patentamt
European Patent Office
Office européen des brevets

(11) EP 4 535 030 A1

(12) EUROPEAN PATENT APPLICATION

(43) Date of publication:
09.04.2025 Bulletin 2025/15

(51) International Patent Classification (IPC):
G01S 7/4914 (2020.01)     G01S 17/36 (2006.01)
G01S 17/894 (2020.01)

(21) Application number: 24176179.0

(22) Date of filing: 16.05.2024

(52) Cooperative Patent Classification (CPC):
G01S 17/894; G01S 7/4914; G01S 17/36

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.10.2023 KR 20230133324

(71) Applicant: Hyundai Mobis Co., Ltd.
Gangnam-gu
Seoul 06141 (KR)

(72) Inventor: KIM, Dong Uk
16891 Yongin-si (KR)

(74) Representative: Vossius & Partner
Patentanwälte Rechtsanwälte mbB
Siebertstrasse 3
81675 München (DE)

(54) **IMAGE SENSING APPARATUS**

(57) An image sensing apparatus includes: a pixel array, in which pixels converting light reflected from an object into electrical signals are arranged in a grid form; and a processor configured to generate a difference of charge quantities, of which at least one of an exposure time and a phase is different, from electrical signals detected from the pixel array, and to extract distance information for the object for each pixel in each frame.

## FIG.1

## Description

## BACKGROUND

FIELD

Exemplary embodiments of the present disclosure relate to an image sensing apparatus.

DISCUSSION OF THE BACKGROUND

In recent years, time-of-flight (ToF) image sensors have begun to be installed in mobile devices, leading to a rapid increase in market demand.

An indirect time-of-flight (iToF) sensor measures a distance by calculating time based on a phase difference generated by a movement of light. In this case, when the distance is calculated using two charge values (Q) that store phase information, a depth error may occur due to external light. An accurate distance measurement requires external light removal. To this end, four charge values Q0, Q90, Q180, and Q270, each storing phase information, are obtained. The distance is then calculated using two charge quantity differences ($\Delta Q0 = Q0-Q180$, $\Delta Q0 = Q90-Q270$).

The iToF sensor typically employs a pixel configured to include two taps for performance reasons, and in this case, two frames are used to calculate the distance.

An iToF system typically operates within a limited range of distances. The iToF system emits light and detects the phase difference of the light reflected and returning from an object. For a nearby object, the light reflected from the object and incident on the sensor has high intensity, leading to saturation of a charge value (Q) storing a phase. This may cause a critical depth error, thereby severely limiting the measurement range of the iToF sensor.

The related art of the present invention is disclosed in Korean Patent No.10-2567502 (registered on August 10, 2023 and entitled "TIME OF FLIGHT APPARATUS".)

## SUMMARY

An object of the present disclosure is to provide an image sensing apparatus that may enhance a distance measurement range by using a difference of charge quantities that have different exposure times.

According to an aspect of the present disclosure, there is provided an image sensing apparatus, which may include: a pixel array in which pixels to convert light reflected from an object into electrical signals are arranged in a grid form; and a processor, which generates a difference of charge quantities, of which at least one of an exposure time and a phase is different, from electrical signals detected from the pixel array for each of the pixels in each frame, and extracts distance information for the object.

Each of the adjacent pixels in the pixel array of the present disclosure may have different charge quantity differences in the same frame.

The n-th column line and the (n+1)-th column line in the pixel array of the present disclosure may have different charge quantity differences in the same frame.

The n-th row line and the (n+1)-th row line in the pixel array of the present disclosure may have different charge quantity differences in the same frame.

The pixel array of the present disclosure may include the pixel, wherein corresponding pixels in each frame have different charge quantity differences in the n-th frame and the (n+1)-th frame.

The exposure time of the present disclosure may be an integration time during which charge accumulates.

The integration time of the present disclosure may include at least one of a maximum time of the integration time, 1/2 of the maximum time, 1/4 of the maximum time, and 1/8 of the maximum time.

The processor of the present disclosure may obtain a charge quantity difference corresponding to the integration time of each of the adjacent pixels for each pixel and extract a charge quantity difference corresponding to the integration time for each pixel based on the obtained integration time of each of the adjacent pixels.

The integration time of the present disclosure may include at least one of a maximum time of the integration time, 1/4 of the maximum time, 1/16 of the maximum time, and 1/64 of the maximum time.

The integration time of the present disclosure may be adjusted through capacitors having different sizes.

The processor of the present disclosure may extract distance information of the object by using charge quantity differences of the same pixels in two frames.

The processor of the present disclosure may extract distance information of the object by using charge quantity differences of the same pixels in the n-th frame and the (n+1)-th frame.

The charge quantity difference of the pixel in the pixel array of the present disclosure may include at least one of the followings: the charge quantity difference between a charge at the 0-degree phase and a charge at the 180-degree phase; and the charge quantity difference between a charge at the 0-degree phase and a charge at the 180-degree phase.

According to an aspect of the present disclosure, the image sensing apparatus may enhance the distance measurement range by using a plurality of charge quantity differences having different exposure times.

According to another aspect of the present disclosure, the image sensing apparatus may obtain up to four different pieces of distance information for one pixel by applying an adaptive high dynamic depth range (AHDDR).

## BRIEF DESCRIPTION OF THE DRAWINGS

FIG. 1 is a block diagram of an image sensing apparatus according to an embodiment of the present disclosure.

FIG. 2 is a diagram illustrating a pixel array according to an embodiment of the present disclosure.

FIG. 3 is a circuit diagram of a pixel according to an embodiment of the present disclosure.

FIG. 4 is a diagram illustrating an example of frame output according to an embodiment of the present disclosure.

FIG. 5 is a diagram illustrating an example of interpolating a charge quantity difference of the pixel according to an embodiment of the present disclosure.

FIG. 6 is a diagram illustrating an example of calculating distance information according to an embodiment of the present disclosure.

FIG. 7 is a diagram illustrating an example of adjusting the size of an FD node capacitor according to an embodiment of the present disclosure.

FIG. 8 is a diagram illustrating an example of a TX configuration of the pixel array according to an embodiment of the present disclosure.

FIG. 9 is a diagram illustrating an example of an RST configuration of the pixel array according to an embodiment of the present disclosure.

FIG. 10 is a diagram illustrating an example of an AB configuration of the pixel array according to an embodiment of the present disclosure.

FIG. 11 is a diagram illustrating the pixel array composed of TX, RST, and AB according to an embodiment of the present disclosure.

FIG. 12 is a timing diagram of the pixel according to an embodiment of the present disclosure.

## DETAILED DESCRIPTION OF THE ILLUSTRATED EMBODIMENTS

The components described in the example embodiments may be implemented by hardware components including, for example, at least one digital signal processor (DSP), a processor, a controller, an application-specific integrated circuit (ASIC), a programmable logic element, such as an FPGA, other electronic devices, or combinations thereof. At least some of the functions or the processes described in the example embodiments may be implemented by software, and the software may be recorded on a recording medium. The components, the functions, and the processes described in the example embodiments may be implemented by a combination of hardware and software.

The method according to example embodiments may be embodied as a program that is executable by a computer, and may be implemented as various recording media such as a magnetic storage medium, an optical reading medium, and a digital storage medium.

Various techniques described herein may be implemented as digital electronic circuitry, or as computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal for processing by, or to control an operation of a data processing apparatus, e.g., a programmable processor, a computer, or multiple computers. A computer program(s) may be written in any form of a programming language, including compiled or interpreted languages and may be deployed in any form including a stand-alone program or a module, a component, a subroutine, or other units suitable for use in a computing environment. A computer program may be deployed to be executed on one computer or on multiple computers at one site or distributed across multiple sites and interconnected by a communication network.

Processors suitable for execution of a computer program include, by way of example, both general and special purpose microprocessors, and any one or more processors of any kind of digital computer. Generally, a processor will receive instructions and data from a read-only memory or a random access memory or both. Elements of a computer may include at least one processor to execute instructions and one or more memory devices to store instructions and data. Generally, a computer will also include or be coupled to receive data from, transfer data to, or perform both on one or more mass storage devices to store data, e.g., magnetic, magneto-optical disks, or optical disks. Examples of information carriers suitable for embodying computer program instructions and data include semiconductor memory devices, for example, magnetic media such as a hard disk, a floppy disk, and a magnetic tape, optical media such as a compact disk read only memory (CD-ROM), a digital video disk (DVD), etc. and magneto-optical media such as a floptical disk, and a read only memory (ROM), a random access memory (RAM), a flash memory, an erasable programmable ROM (EPROM), and an electrically erasable programmable ROM (EEPROM) and any other known computer readable medium. A processor and a memory may be supplemented by, or integrated into, a special purpose logic circuit.

The processor may run an operating system (OS) and one or more software applications that run on the OS. The processor device also may access, store, manipulate, process, and create data in response to execution of the software. For purpose of simplicity, the description of a processor device is used as singular; however, one skilled in the art will be appreciated that a processor device may include multiple processing elements and/or multiple types of processing elements. For example, a processor device may include multiple processors or a processor and a controller. In addition, different processing configurations are possible, such as parallel processors.

Also, non-transitory computer-readable media may be any available media that may be accessed by a computer, and may include both computer storage media and transmission media.

The present specification includes details of a number of specific implements, but it should be understood that the details do not limit any invention or what is claimable in the specification but rather describe features of the specific example embodiment. Features described in the specification in the context of individual example embodiments may be implemented as a combination in a single example embodiment. In contrast, various features described in the specification in the context of a single example embodiment may be implemented in multiple example embodiments individually or in an appropriate sub-combination. Furthermore, the features may operate in a specific combination and may be initially described as claimed in the combination, but one or more features may be excluded from the claimed combination in some cases, and the claimed combination may be changed into a sub-combination or a modification of a sub-combination.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

It should be understood that the example embodiments disclosed herein are merely illustrative and are not intended to limit the scope of the invention. It will be apparent to one of ordinary skill in the art that various modifications of the example embodiments may be made without departing from the spirit and scope of the claims and their equivalents.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, embodiments that include other components in addition to the components described in the various embodiments are also included in the scope of the present disclosure.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, when a component is referred to as being "linked," "coupled," or "connected" to another component, it is understood that not only a direct connection relationship but also an indirect connection relationship through an intermediate component may also be included. In addition, when a component is referred to as "comprising" or "having" another component, it may mean further inclusion of another component not the exclusion thereof, unless explicitly described to the contrary.

In the present disclosure, the terms first, second, etc. are used only for the purpose of distinguishing one component from another, and do not limit the order or importance of components, etc., unless specifically stated otherwise. Thus, within the scope of this disclosure, a first component in one exemplary embodiment may be referred to as a second component in another embodiment, and similarly a second component in one exemplary embodiment may be referred to as a first component.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, exemplary embodiments that include other components in addition to the components described in the various embodiments are also included in the scope of the present disclosure.

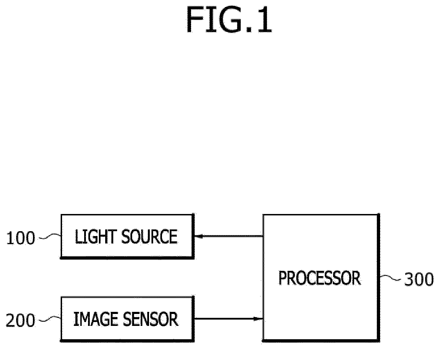

FIG. 1 is a block diagram of an image sensing apparatus according to an embodiment of the present disclosure.

Referring to FIG. 1, the image sensing apparatus may include a light source 100, an image sensor 200, and a processor 300 according to an embodiment of the present disclosure.

The light source 100 may illuminate an object (not illustrated) with light.

The light source 100 may illuminate the object with light during a predetermined exposure cycle.

The exposure cycle may be one frame cycle. Thus, the exposure cycle may be repeated when a plurality of frames are generated.

Light emitted from the light source 100 may be reflected from the object and input to the image sensor 200.

The light source 100 may be a light-emitting diode emitting light of an infrared or near-infrared wavelength, or a laser diode emitting a laser. The type of the light source 100 is not particularly limited.

The image sensor 200 may receive light emitted from the light source 100 and reflected from the object and generate electrical signals.

The image sensor 200 may be synchronized with a flash cycle of the light source 100 and receive light.

The image sensor 200 may include a pixel array 210.

The pixel array 210 may include a plurality of pixels 211 arranged in a grid form.

The pixel 211 may receive light reflected from the object and convert the light into electrical signals.

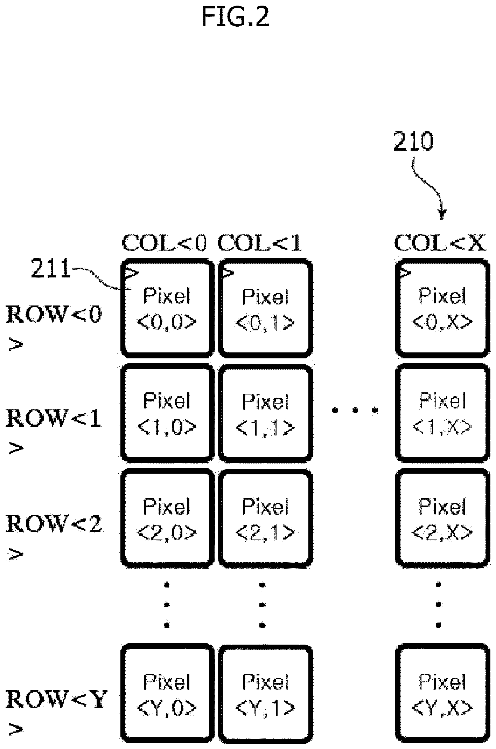

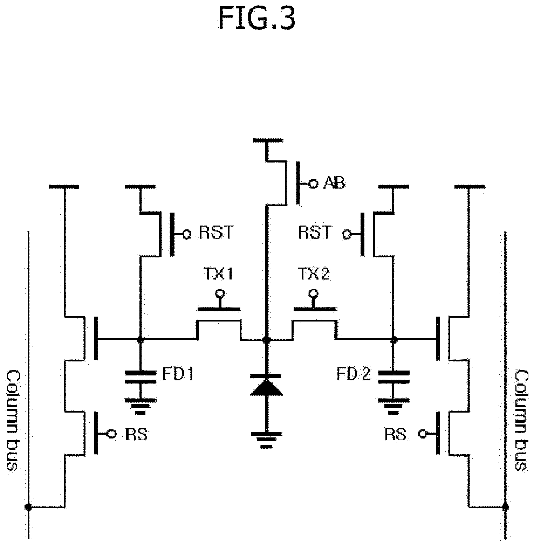

FIG. 2 is a diagram illustrating a pixel array according to an embodiment of the present disclosure, and FIG. 3 is a circuit diagram of a pixel according to an embodiment of the present disclosure.

Referring to FIGS. 2 and 3, the pixel array 210 may include the plurality of the pixels 211 in a grid form.

The pixel 211 may be the pixel 211 of a 2-tap type.

When light is input, an electrical current may be output to a photodiode due to the input light.

At this time, switch TX1 may turn on at the same phase as the input light. Switch TX2 may turn on at the opposite phase of the input light.

When switch TX1 turns on at the same phase as the input light, the electrical current from the photodiode may be applied to a capacitor of FD1, thereby charging the capacitor of FD1. At this time, switch TX2 turns off.

On the other hand, when switch TX2 turns on at the opposite phase to the input light, the electrical current from the photodiode is applied to a capacitor of FD2, thereby charging the capacitor of FD2. At this time, switch TX1 turns off.

A difference of charge quantities between the charge charged in the capacitor of FD1 and the charge charged in the capacitor FD2 (hereinafter simply referred to as a "charge quantity difference") may be extracted for each frame.

Based on the charge quantity difference of the same pixels 211 extracted for each frame, distance information for the object may be extracted.

AB switch prevents FD1 or FD2 from being charged when strong light such as blooming is received.

Referring to FIG. 3, each RST switch may discharge the capacitor of FD1 and the capacitor of FD2, respectively.

In the embodiment, the adjacent pixels 211 in each frame may have different charge quantity differences. That is, each of the pixels 211 in the same frame may not output the same charge quantity difference, but output different charge quantity differences. Based on the different charge quantity differences, a distance measurement range may be improved.

In the same frame, the n-th column line and the (n+1)-th column line may have different charge quantity differences, and the n-th row line and the (n+1)-th row line may have different charge quantity differences.

Two frames are required to extract distance information for the object. Assuming that the frames used to extract distance information are referred to as herein Frame #1 and Frame #2, the output of the pixel array 210 of Frame #1 and Frame #2 may be repeated.

That is, for the pixel array 210, the same pixels 211 in the n-th frame and the (n+1)-th frame may have different charge quantity differences.

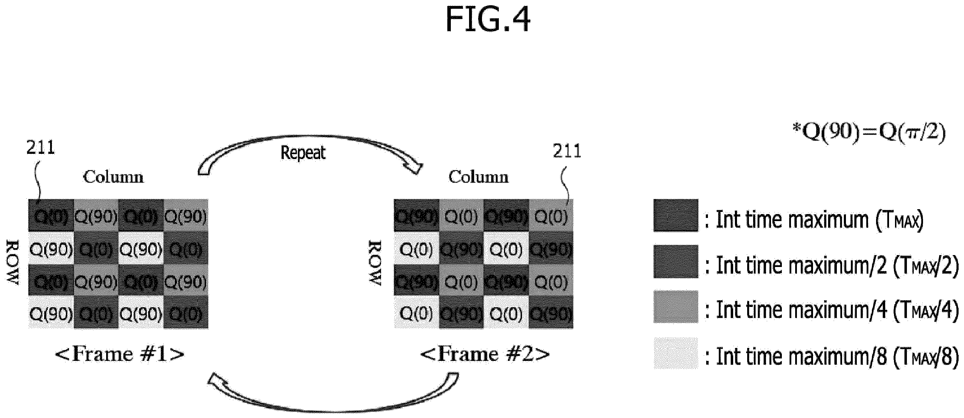

FIG. 4 is a diagram illustrating an example of frame output according to an embodiment of the present disclosure.

Referring to FIG. 4, in Frame #1, the charge quantity difference of pixel <0,0> is $\Delta Q(0)$, the charge quantity difference of pixel <0,1> is $\Delta Q(90)$, the charge quantity difference of pixel <1,0> is $\Delta Q(90)$, and the charge quantity difference of pixel <1,1> is $\Delta Q(0)$.

$\Delta Q(0)$ may be the charge quantity difference between a charge at the 0-degree phase and a charge at the 180-degree phase.

$\Delta Q(90)$ may be the charge quantity difference between a charge at the 90-degree phase and a charge at the 270-degree phase.

In Frame #2, the charge quantity difference of pixel <0,0> is $\Delta Q(90)$, the charge quantity difference of pixel <0,1> is $\Delta Q(0)$, the charge quantity difference of pixel <1,0> is $\Delta Q(0)$, and the charge quantity difference of pixel <1,1> is $\Delta Q(90)$.

Here, the output of the pixel array 210 of Frame #1 and Frame #2 may be repeated for each frame. That is, after the output of the pixel array 210 of Frame #2, the pixel array 210 of Frame #1 may be output, and then the pixel array 210 of Frame #2 may be output again.

The processor 300 may generate different charge quantity differences, for the pixel 211 in a frame, from electrical signals detected from the pixel array 210, and extract distance information for the object.

The processor 300 may extract charge quantity differences at a plurality of different exposure times for each of the pixels 211.

The plurality of the different exposure times may be an integration time during which charge accumulates according to an exposure cycle.

The integration times may be a maximum time of the integration time ($T_{MAX}$), 1/2 of the maximum time ($T_{MAX}/2$), 1/4 of the maximum time ($T_{MAXMAX}/4$), and 1/8 of the maximum time ($T_{MAX}/8$).

In another embodiment, the integration times may be a maximum time ($T_{MAX}$), 1/4 of the maximum time ($T_{MAX}/4$), 1/16 of the maximum time ($T_{MAX}/16$), and 1/64 of the maximum time ($T_{MAX}/64$).

The integration time is not particularly limited.

The processor 300 may use an interpolation method to obtain charge quantity differences at different integration times for each of the pixels 211.

To this end, the processor 300 may obtain, for each of the pixels 211, a charge quantity difference corresponding to the integration time of each of the adjacent pixels 211. The processor 300 may then extract a charge quantity difference corresponding to the integration time for each of the pixels 211 based on the obtained integration time of each of the adjacent pixels 211.

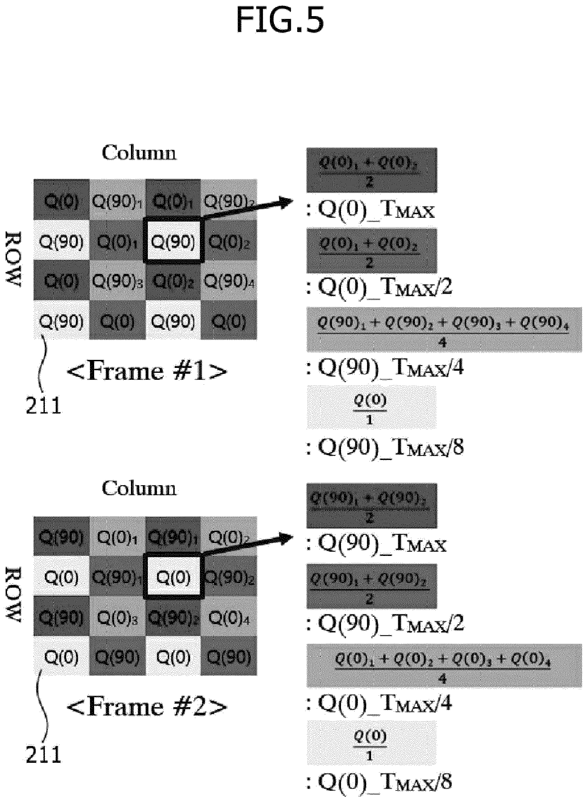

FIG. 5 is a diagram illustrating an example of interpolating a charge quantity difference of the pixel according to an embodiment of the present disclosure.

Referring to FIG. 5, the charge quantity differences $\Delta Q(90)$ and $\Delta Q(0)$ of the pixels 211 in the blue box in Frame #1 and Frame #2, respectively, are illustrated as an example.

First, for the charge quantity difference $\Delta Q(90)$ of the pixel 211 in the blue box in Frame #1, the processor 300 may obtain the charge quantity difference $\Delta Q(90)$ at the maximum time ($T_{MAX}$) by averaging the charge quantity differences ($\Delta Q(0)_1$, $\Delta Q(0)_2$) of the pixels 211 having charge quantity difference at the maximum time ($T_{MAX}$) (in FIG. 5, the pixels above and below the pixel having the

charge quantity difference $\Delta Q(90)$) among the adjacent pixels 211. The mathematical expression is:

$$\frac{\Delta Q(0)_1 + \Delta Q(0)_2}{2}$$

For the charge quantity difference $\Delta Q(90)$ of the pixel 211 in the blue box in Frame #1, the processor 300 may obtain the charge quantity difference $\Delta Q(90)$ at 1/2 of the maximum time ($T_{MAX}/2$) by averaging the charge quantity differences ($\Delta Q(0)_1$, $\Delta Q(0)_2$) of the pixels 211 having the charge quantity difference at 1/2 of the maximum time ($T_{MAX}/2$) (the pixels to the left and right of the pixel having the charge quantity difference $\Delta Q(90)$) among the adjacent pixels 211. The mathematical expression is:

$$\frac{\Delta Q(0)_1 + \Delta Q(0)_2}{2}$$

For the charge quantity difference $\Delta Q(90)$ of the pixel 211 in the blue box in Frame #1, the processor 300 may obtain the charge quantity difference $\Delta Q(90)$ at 1/4 of the maximum time ($T_{MAX}/4$) by averaging the charge quantity differences ($\Delta Q(90)_1$, $\Delta Q(90)_2$, $\Delta Q(90)_2$, $\Delta Q(90)_4$) of the pixels 211 having the charge quantity difference at 1/4 of the maximum time ($T_{MAX}/4$) (the four pixels located diagonally with respect to the pixel having the charge quantity difference $\Delta Q(90)$) among the adjacent pixels 211. The mathematical expression is:

$$\frac{\Delta Q(90)_1 + \Delta Q(90)_2 + \Delta Q(90)_3 + \Delta Q(90)_4}{4}$$

For the charge quantity difference $\Delta Q(90)$ of the pixel 211 in the blue box in Frame #1, the processor 300 may obtain the charge quantity difference $\Delta Q(90)$ at 1/8 of the maximum time ($T_{MAX}/8$), which is its own charge quantity difference ($\Delta Q(90)$). The mathematical expression is:

$$\frac{\Delta Q(90)}{1}$$

Next, for the charge quantity difference $\Delta Q(0)$ of the pixel 211 in the blue box in Frame #2, the processor 300 may obtain the charge quantity difference $\Delta Q(0)$ at the maximum time ($T_{MAX}$) by averaging the charge quantity differences ($\Delta Q(90)_1$, $\Delta Q(90)_2$) of the pixels 211 having the charge quantity difference at the maximum time

$(T_{MAX})$(in FIG. 5, the pixels above and below the pixel having the charge quantity difference $\Delta Q(90)$) among the adjacent pixels 211. The mathematical expression is:

$$\frac{\Delta Q(90)_1 + \Delta Q(90)_2}{2}$$

For the charge quantity difference $\Delta Q(0)$ of the pixel 211 in the blue box in Frame #2, the processor 300 may obtain the charge quantity difference $\Delta Q(0)$ at 1/2 of the maximum time $(T_{MAX}/2)$ by averaging the charge quantity differences $(\Delta Q(90)_1, \Delta Q(90)_2)$ of the pixels 211 having the charge quantity difference at 1/2 of the maximum time $(T_{MAX}/2)$ (the pixels to the left and right of the pixel having the charge quantity difference $\Delta Q(0)$) among the adjacent pixels 211. The mathematical expression is:

$$\frac{\Delta Q(90)_1 + \Delta Q(90)_2}{2}$$

For the charge quantity difference $\Delta Q(0)$ of the pixel 211 in the blue box in Frame #2, the processor 300 may obtain the charge quantity difference $\Delta Q(0)$ at 1/4 of the maximum time $(T_{MAX}/4)$ by averaging the charge quantity differences $(\Delta Q(0)_1, \Delta Q(0)_2, \Delta Q(0)_2, \Delta Q(0)_4)$ of the pixels 211 having the charge quantity difference at 1/4 of the maximum time $(T_{MAX}/4)$ (the four pixels located diagonally with respect to the pixel having the charge quantity difference $\Delta Q(0)$) among the adjacent pixels 211. The mathematical expression is:

$$\frac{\Delta Q(0)_1 + \Delta Q(0)_2 + \Delta Q(0)_3 + \Delta Q(0)_4}{4}$$

For the charge quantity difference $\Delta Q(0)$ of the pixel 211 in the blue box in Frame #2, the processor 300 may obtain the charge quantity difference $\Delta Q(0)$ at 1/8 of the maximum time $(T_{MAX}/8)$, which is its own charge quantity difference $(\Delta Q(0))$. The mathematical expression is:

$$\frac{\Delta Q(0)}{1}$$

That is, for each of the pixels 211, the processor 300 may use the charge quantity differences of the adjacent pixels 211 to extract charge quantity difference having a maximum time of the integration time $(T_{MAX})$, 1/2 of the maximum time $(T_{MAX}/2)$, 1/4 of the maximum time $(T_{MAX}/4)$, and 1/8 of the maximum time $(T_{MAX}/8)$. The processor 300 may perform this process for each frame.

The processor 300 may extract distance information of the object by using a charge quantity difference of the same pixels 211 in Frame #1 and Frame #2. In this case, the processor 300 may extract distance information of the object by using a charge quantity difference of the same pixels 211 in two consecutive frames. That is, the processor 300 may extract the distance information of the object by using a charge quantity difference of the same pixels 211 in the n-th frame and the (n+1)-th frame.

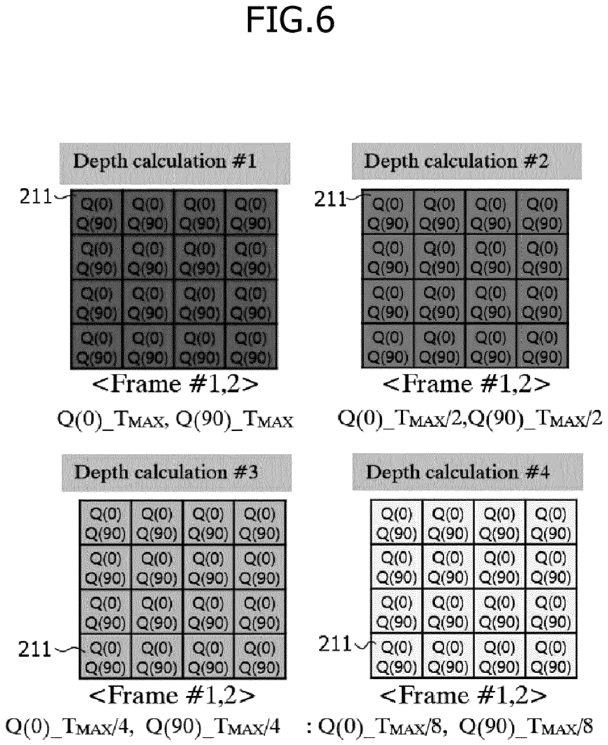

FIG. 6 is a diagram illustrating an example of calculating distance information according to an embodiment of the present disclosure.

Referring to FIG. 6, when two frames required to calculate distance information are referred to as Frame #1 and Frame #2, for five consecutive frames, the processor 300 may extract the first distance information (Depth calculation #1) by using a charge quantity difference between the first frame (corresponding to Frame #1) and the second frame (corresponding to Frame #2).

The processor 300 may extract the second distance information (Depth calculation #2) by using a charge quantity difference between the second frame (corresponding to Frame #1) and the third frame (corresponding to Frame #2).

The processor 300 may extract the third distance information (Depth calculation #3) by using a charge quantity difference between the third frame (corresponding to Frame #1) and the fourth frame (corresponding to Frame #2).

The processor 300 may extract the fourth distance information (Depth calculation #4) by using a charge quantity difference between the fourth frame (corresponding to Frame #1) and the fifth frame (corresponding to Frame #2).

In this way, the processor 300 may extract distance information having a high dynamic range by using the charge quantity differences output from Frame #1 and Frame #2.

The integration time adjustment method described in the embodiment is a method for extracting charge quantity differences having a maximum time of the integration time $(T_{MAX})$, 1/2 of the maximum time $(T_{MAX}/2)$, 1/4 of the maximum time $(T_{MAX}/4)$, and 1/8 of the maximum time $(T_{MAX}/8)$, and then, based on the extracted charge quantity differences, extracting distance information. In addition to the method, a FD node capacitor size adjustment method may be used to extract a charge quantity difference.

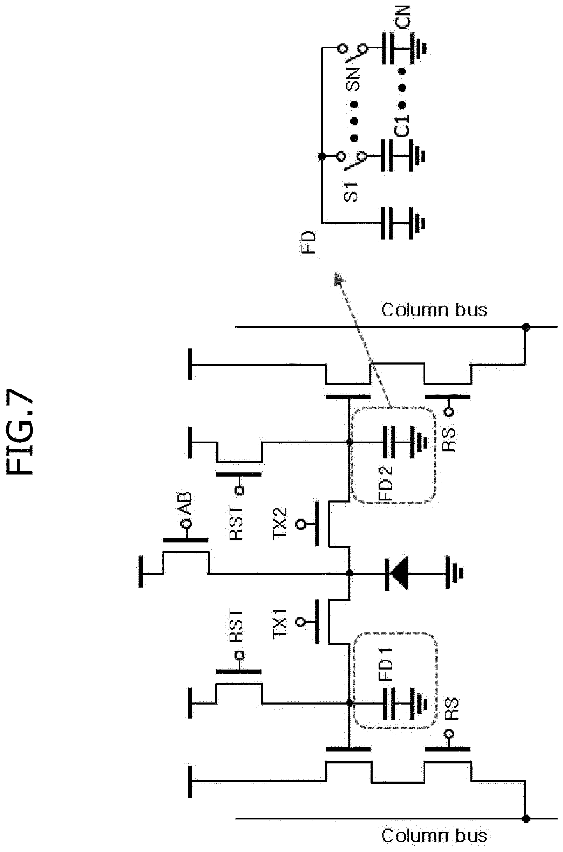

FIG. 7 is a diagram illustrating an example of adjusting the size of FD node capacitor adjustment according to an embodiment of the present disclosure.

Referring to FIG. 7, a plurality of capacitors C1,...,CN are connected in parallel to FD2 node, and switches S1,...,SN are connected in series to the capacitors C1,...,CN, respectively, thereby controlling each of the switches S1,...,SN to adjust the size of the FD node capacitor. Based on the adjustment, charge quantity differences of various values may be extracted based on the charge quantity of FD1 node capacitor and the charge quantity of the plurality of the capacitors C1,...,CN connected to FD2 node.

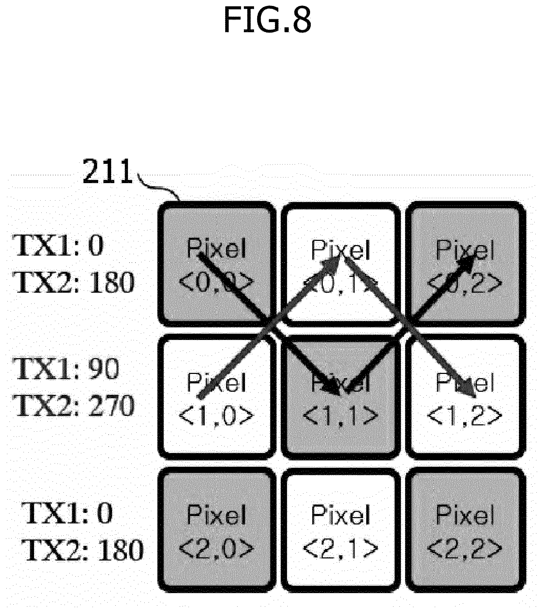

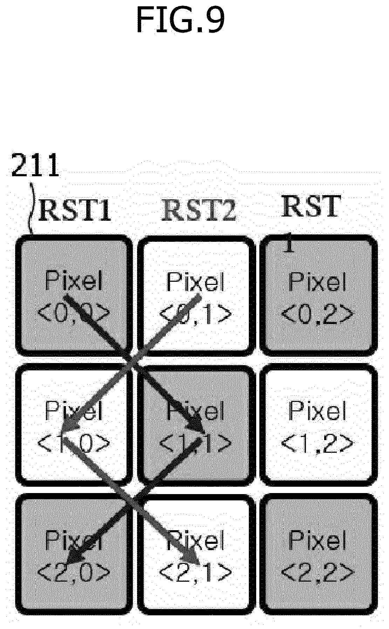

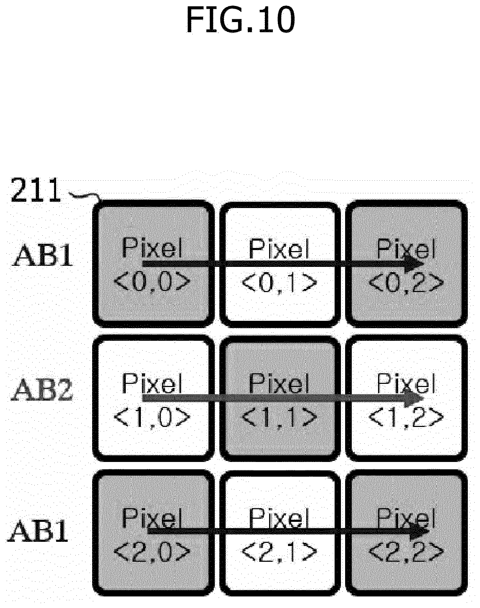

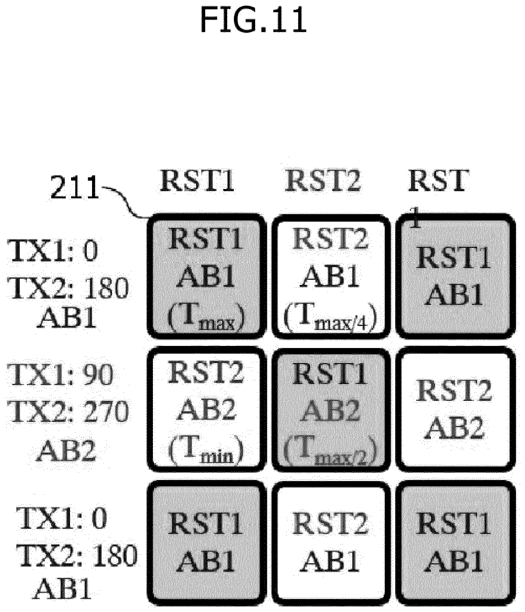

FIG. 8 is a diagram illustrating an example of a TX configuration of the pixel array according to an embodiment of the present disclosure. FIG. 9 is a diagram illustrating an example of an RST configuration of the pixel array according to an embodiment of the present disclosure. FIG. 10 is a diagram illustrating an example of an AB configuration of the pixel array according to an embodiment of the present disclosure. FIG. 11 is a diagram illustrating the pixel array composed of TX, RST, and AB according to an embodiment of the present disclosure.

In FIGS. 8 to 10, examples are illustrated where TX switch, RST switch, and AB switch of the respective pixel 211 are configured in a manner that the respective pixel 211 has charge quantity differences of different intensities.

In FIG. 8, TX1 switch and TX2 switch operate with a 180-degree delay. In this case, pixels (TX1:0, Tx1:180), wherein TX1 switch turns on at the 0-degree phase and turns off at the 180-degree phase, and TX2 switch turns on at the 180-degree phase and turns off at the 0-degree phase, may be alternately arranged in a column line or in a row line in the pixel array 210.

Pixels (TX1:90, TX1:270), wherein TX1 switch turns on at the 90-degree phase and turns off at the 270-degree phase, and TX2 switch turns on at the 270-degree phase and turns off at the 90-degree phase, may be alternately arranged in a column line or in a row line in the pixel array 210.

In this way, pixels (TX1:0, TX1:180) and pixels (TX1:90, TX1:270) may be arranged in a zigzag form in a horizontal direction.

In addition, RST1 and RST2 may be arranged in a zigzag form in a downward direction, and AB1 and AB2 may be alternately arranged in a row line. Here, when an AB is enabled, TXs are disabled.

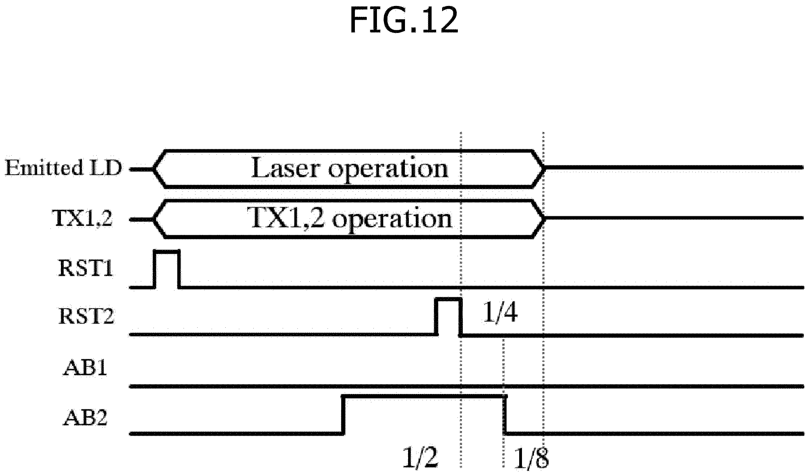

FIG. 12 is a timing diagram of the pixel according to an embodiment of the present disclosure.

Referring to FIG. 12, the photodiode continues to operate to receive light, and TX1 and TX2 operate.

When AB1 is disabled, RST1 continues to integrate after the operation, resulting in the longest integration time and integration for a maximum time.

When AB2 is enabled, a TX does not operate, resulting in charging for 1/2 of the maximum time of the integration time.

In addition, when AB2 is enabled, RST2 operates, resulting in charging for 1/4 of the maximum time of the integration time.

When AB2 is disabled, sensing occurs in the remaining section, resulting in charging for 1/4 of the maximum time of the integration time.

The processor 300 may be connected to a memory (not illustrated), and the memory may store instructions to perform an operation, a step, and the like according to the embodiments of the present disclosure. Here, the memory may include a magnetic storage medium or a flash storage medium in addition to a volatile storage device that requires power to maintain stored information, but the scope of the present disclosure is not limited thereto.

In addition, the processor 300 may also be configured separately at the hardware, software, or logic level to perform each function. In this case, a dedicated hardware may be employed to perform each function, respectively. To this end, the processor 300 may be implemented in or include at least one of the followings: an application specific integrated circuit (ASIC), a digital signal processor (DSP), programmable logic devices (PLDs), field programmable gate arrays (FPGAs), a central processing unit (CPU), microcontrollers, and/or microprocessors.

The processor 300 may be implemented in a central processing unit (CPU) or a system on chip (SoC), may run an operating system or an application to control a plurality of hardware or software components connected to the processor 300, and may perform various data processing and computations. The processor 300 may be configured to execute at least one instruction stored in the memory and to store the resulting data in the memory.

As described above, the image sensing apparatus according to an embodiment of the present disclosure may enhance the distance measurement range by using a plurality of charge quantity differences.

In addition, the image sensing apparatus according to an embodiment of the present disclosure may obtain up to four different pieces of distance information for one pixel 211 by applying an adaptive high dynamic depth range (AHDDR).

The disclosure has been described with reference to the embodiments shown in the drawings, but these are only exemplary, and those skilled in the art to which the technology pertains should understand that various modifications and equally numerous other embodiments are possible therefrom. Therefore, the true technical protection scope of the present disclosure will be determined by the following claims.

## Claims

1. An image sensing apparatus comprising:

   a pixel array in which pixels to convert light reflected from an object into electrical signals are arranged in a grid form; and
   a processor configured to generate a difference of charge quantities, of which at least one of an exposure time and a phase is different, from electrical signals detected from the pixel array for each of the pixels in each frame, and to extract distance information for the object.

2. The image sensing apparatus of claim 1, wherein in the same frame, each of the adjacent pixels in the pixel array has different charge quantity differences.

3. The image sensing apparatus of claim 2, wherein in the same frame, the n-th column line and the (n+1)-th column line in the pixel array have different charge quantity differences.

4. The image sensing apparatus of claim 2, wherein, in the same frame, the n-th row line and the (n+1)-th row line have different charge quantity differences.

5. The image sensing apparatus of claim 1, wherein the pixel array comprises the pixel, corresponding pixels in each frame having different charge quantity differences in the n-th frame and the (n+1)-th frame.

6. The image sensing apparatus of claim 5, wherein the exposure time is an integration time during which charge accumulates.

7. The image sensing apparatus of claim 6, wherein the integration time comprises at least one of a maximum time of the integration time, 1/2 of the maximum time, 1/4 of the maximum time, and 1/8 of the maximum time.

8. The image sensing apparatus of claim 6, or 7, wherein the processor obtains a charge quantity difference corresponding to the integration time of each of the adjacent pixels for each of the pixels, and extracts a charge quantity difference corresponding to the integration time for each of the pixels based on the obtained integration time of each of the adjacent pixels.

9. The image sensing apparatus of claim 6, 7, or 8, wherein the integration time comprises at least one of a maximum time of the integration time, 1/4 of the maximum time, 1/16 of the maximum time, and 1/64 of the maximum time.

10. The image sensing apparatus of any one of claims 6 to 9, wherein the integration time is adjusted through capacitors having different sizes.

11. The image sensing apparatus of any one of claims 1 to 10, wherein the processor extracts distance information of the object by using charge quantity differences of the same pixels in two frames.

12. The image sensing apparatus of claim 11, wherein the processor extracts distance information of the object by using charge quantity differences of the same pixels in the n-th frame and the (n+1)-th frame.

13. The image sensing apparatus of any one of claims 1 to 12, wherein a charge quantity difference of the pixel in the pixel array comprises at least one of the followings: a charge quantity difference between a charge at the 0-degree phase and a charge at the 180-degree phase; and a charge quantity difference between a charge at the 0-degree phase and a charge at the 180-degree phase.

# FIG.1

```
100 —~  LIGHT SOURCE  <———

                            PROCESSOR  ~ 300

200 —~  IMAGE SENSOR  ———>
```

# FIG.2

# FIG.3

# FIG.4

$$*Q(90)=Q(\pi/2)$$

211
Column

| | | | |
|---|---|---|---|
| Q(0) | Q(90) | Q(0) | Q(90) |
| Q(90) | Q(0) | Q(90) | Q(0) |
| Q(0) | Q(90) | Q(0) | Q(90) |
| Q(90) | Q(0) | Q(90) | Q(0) |

ROW

<Frame #1>

Repeat

211
Column

| | | | |
|---|---|---|---|
| Q(90) | Q(0) | Q(90) | Q(0) |
| Q(0) | Q(90) | Q(0) | Q(90) |
| Q(90) | Q(0) | Q(90) | Q(0) |
| Q(0) | Q(90) | Q(0) | Q(90) |

ROW

<Frame #2>

: Int time maximum ($T_{MAX}$)

: Int time maximum/2 ($T_{MAX}/2$)

: Int time maximum/4 ($T_{MAX}/4$)

: Int time maximum/8 ($T_{MAX}/8$)

EP 4 535 030 A1

13

# FIG.5

# FIG.6

# FIG.7

EP 4 535 030 A1

# FIG.8

211

TX1: 0
TX2: 180

Pixel <0,0>   Pixel <0,1>   Pixel <0,2>

TX1: 90
TX2: 270

Pixel <1,0>   Pixel <1,1>   Pixel <1,2>

TX1: 0
TX2: 180

Pixel <2,0>   Pixel <2,1>   Pixel <2,2>

# FIG.9

# FIG.10

# FIG.11

211

|  | RST1 | RST2 | RST1 |
|---|---|---|---|
| TX1: 0<br>TX2: 180<br>AB1 | RST1<br>AB1<br>$(T_{max})$ | RST2<br>AB1<br>$(T_{max/4})$ | RST1<br>AB1 |
| TX1: 90<br>TX2: 270<br>AB2 | RST2<br>AB2<br>$(T_{min})$ | RST1<br>AB2<br>$(T_{max/2})$ | RST2<br>AB2 |
| TX1: 0<br>TX2: 180<br>AB1 | RST1<br>AB1 | RST2<br>AB1 | RST1<br>AB1 |

# FIG.12

EP 4 535 030 A1

Europäisches
Patentamt

European
Patent Office

Office européen
des brevets

# EUROPEAN SEARCH REPORT

**Application Number**

EP 24 17 6179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/208150 A1 (JIN YOUNG-GU [KR] ET AL) 4 July 2019 (2019-07-04) * the whole document * | 1-13 | INV. G01S7/4914 G01S17/36 G01S17/894 |

----- 

**TECHNICAL FIELDS SEARCHED (IPC)**

G01S

The present search report has been drawn up for all claims

| Place of search | Date of completion of the search | Examiner |
|---|---|---|
| Munich | 8 October 2024 | Beer, Mark |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 6179

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | Publication date | Patent family member(s) | Publication date |
|---|---|---|---|
| US 2019208150 A1 | 04-07-2019 | CN 109994494 A | 09-07-2019 |
| | | JP 7170526 B2 | 14-11-2022 |
| | | JP 2019120690 A | 22-07-2019 |
| | | KR 20190081591 A | 09-07-2019 |
| | | US 2019208150 A1 | 04-07-2019 |

EPO FORM P0459

For more details about this annex : see Official Journal of the European Patent Office, No. 12/82

**REFERENCES CITED IN THE DESCRIPTION**

**Patent documents cited in the description**

- KR 102567502